**Europäisches Patentamt**

**European Patent Office**

**Office européen des brevets**

(19)

(11) Veröffentlichungsnummer : **0 354 386 B1**

(12) # EUROPÄISCHE PATENTSCHRIFT

(45) Veröffentlichungstag der Patentschrift :
**11.12.91 Patentblatt 91/50**

(51) Int. Cl.⁵ : **G01L 3/10**

(21) Anmeldenummer : **89113082.5**

(22) Anmeldetag : **17.07.89**

(54) **Messaufnehmer für Längen- oder Abstandsänderungen, insbesondere für berührungslose Messung von Drehmomenten an rotierenden Wellen.**

(30) Priorität : **11.08.88 DE 3827301**
**24.05.89 DE 3916959**

(43) Veröffentlichungstag der Anmeldung :
**14.02.90 Patentblatt 90/07**

(45) Bekanntmachung des Hinweises auf die
Patenterteilung :
**11.12.91 Patentblatt 91/50**

(84) Benannte Vertragsstaaten :
**AT BE CH DE ES FR GB IT LI NL SE**

(56) Entgegenhaltungen :
**DE-A- 2 217 183**
**GB-A- 2 195 183**

(73) Patentinhaber : **SIEMENS**
**AKTIENGESELLSCHAFT**
**Wittelsbacherplatz 2**
**W-8000 München 2 (DE)**

(72) Erfinder : **Doemens, Günter, Dr.**
**Eichenfeldstrasse 4**
**W-8150 Holzkirchen (DE)**
Erfinder : **Gilch, Markus**
**Schlaghäuseln 2**
**W-8051 Hörgertshausen (DE)**

EP 0 354 386 B1

## Beschreibung

Die Erfindung betrifft einen Meßaufnehmer mit kapazitivem Wandler für Längen- oder Abstandsänderungen, insbesondere für berührungslose Messung von Drehmomenten an rotierenden Wellen.

Die berührungslose, präzise Messung des abgegebenen Drehmomentes und damit der mechanischen Leistung an rotierenden Wellen ist heute eines der vordringlichsten sensorischen Probleme in der Energie- und Automatisierungstechnik. Die Anwendungsfelder liegen in der Überwachung und Regelung von Antrieben sowie in der Wirkungsgradoptimierung von Energieumwandlungsanlagen.

Zur berührungslosen Messung von Drehmomenten bedienen sich die zur Zeit bekannten Verfahren entweder der Erfassung der durch das Moment an der Wellenoberfläche erzeugten mechanischen Spannung oder der Messung der Torsion.

Zur Umsetzung der mechanischen Spannung in eine elektrische Größe werden Dehnungsmeßstreifen auf der Welle angebracht und das Meßsignal über Trägerfrequenz von der rotierenden Welle abgenommen. Das Verfahren ist seit langem bekannt, ist aber in erster Linie für den Laborbereich zur Anwendung gekommen, da das Anbringen der Dehnungsmeßstreifen an der Welle aufwendig und die Meßübertragung sehr kostenintensiv ist. In jüngster Zeit sind auch Entwicklungen bekannt geworden, bei denen die Veränderung der Permeabilität an amorphen Metallschichten durch mechanische Spannungen zur Drehmomentenmessung ausgenutzt werden. Hier bestehen jedoch noch Probleme im Hinblick auf das Aufbringen der amorphen Metallschichten auf die Welle. Die Torsion einer Welle bei den üblichen Dimensionierungen hinsichtlich Wellendurchmesser und Drehmoment ist äußerst gering. Bei einer 70 mm starken Welle eines Elektromotors beträgt beispielsweise die Torsion bei Nenndrehmoment in einem Meßabstand von 30 mm nur wenige Mikrometer. Zur Verstärkung des Torsionsweges schließt man deshalb an den Wellenstumpf eine längere Meßwelle an und greift daran die Torsion berührungslos über induktive Systeme ab. Das Verfahren scheidet jedoch in der Praxis aus, da in der Regel kein Platz für die zusätzliche Meßwelle vorhanden ist. Um auf dem im allgemeinen kurzen Wellenstumpf das Drehmoment dennoch über Torsionen meßbar zu machen ist in der Zeitschrift "VDI-Nachrichten" Nr. 20, 15. Mai 1987 ein Verfahren vorgeschlagen worden, bei dem auf der Welle der Torsionsweg durch ein mechanisches Hebelsystem in eine axiale Bewegung übersetzt wird. Die dann im Zehntelmillimeterbereich liegende axiale Verschiebung wird über ein induktives system berührungslos abgenommen. Der axiale Meßabstand auf der Welle entspricht dabei etwa dem doppelten Wellendurchmesser Eine derartige Erfassung von Drehmomenten erfordert jedoch eine relativ aufwendige Mechanik, wobei auch die erzielte Genauigkeit von etwa 5% für viele Anwendungsfälle nicht ausreicht.

Aus der GB-A-2195183 ist ein Meßaufnehmer zur berührungslosen Messung von Drehmomenten an rotierenden Wellen bekannt, bei welchen der Torsionsweg mit einem kapazitiven Wandler erfaßt wird. Als verstellbare Kapazität ist eine Kondensatoranordnung vorgesehen, deren Elektrodenstrukturen im radialen Abstand zueinander angeordnet sind und parallel zur Wellenoberfläche verlaufen. Eine der Torsion bzw. dem übertragenen Drehmoment entsprechende Kapazitätsänderung wird dabei durch eine Änderung der Elektrodenoberfläche hervorgerufen. Die beiden kammförmig ausgebildeten Elektrodenstrukturen der Kondensatoranordnung sind auf der Wellenoberfläche und auf einem die Welle mit Abstand umschließenden Rohr angeordnet, wobei das Rohr im axialen Abstand zu der Kondensatoranordnung mit der Welle verbunden ist. Dieser axiale Abstand entspricht etwa dem fünffachen Wert des Wellendurchmessers, da die geringen Kapazitätsänderungen eine Verstärkung des Torsionsweges erfordern.

Der Erfindung liegt die Aufgabe zugrunde, einen Meßaufnehmer für die Messung von Drehmomenten zu schaffen, der bei geringen Herstellkosten sowie bei geringem axialen Platzbedarf das über die Welle übertragene Moment und damit auch die mechanische Leistung mit einer Genauigkeit von weniger als 1% berührungslos erfassen kann und ein dem Drehmoment proportionales elektrisches Signal abgibt.

Diese Aufgabe wird bei einem gattungsgemäßen Meßaufnehmer durch folgende Merkmale gelöst :
— die elektrisch voneinander isolierten Elektrodenstrukturen einer Kondensatoranordnung sind durch die zu erfassende Längen- oder Abstandsänderung parallel zueinander verstellbar,
— die eine Elektrodenstruktur besteht aus mehreren ebenen, parallel im Abstand zueinander angeordneten Elektroden zwischen denen die Elektroden der zweiten gleichartigen Elektrodenstruktur angeordnet sind,
— die Gesamtkapazität der Kondensatoranordnung ist durch Parallelschaltung einzelner Elektrodenpaare bestimmt, die jeweils durch eine Elektrode der einen Elektrodenstruktur und eine zugeordnete, benachbarte Elektrode der zweiten Elektrodenstruktur gebildet sind,
— der entsprechend der zu erfassenden Längen- oder Abstandsänderung variable Elektrodenabstand der Elektrodenpaare ist innerhalb des gesamten Meßbereichs klein gegenüber dem Abstand zwischen einander nicht zugeordneten, benachbarten Elektroden der beiden Elektrodenstrukturen.
Es ist also eine mechanisch-elektrische Meßgrößenumformung vorgesehen, bei welcher eine verstellbare

2

Meßkapazität entsprechend der zu erfassenden Längen- oder Abstandsänderung direkt verändert wird und eine verhältnisgleiche Kapazitätsänderung als Ausgangsgröße erzeugt. Die Meßkapazität wird durch zwei relativ zueinander verstellbare Elektrodenstrukturen gebildet, wobei die parallel zueinander ausgerichteten Elektroden beider Elektrodenstrukturen abwechselnd angeordnet sind und somit parallel geschaltete Elektrodenpaare bilden. Entscheidend ist dabei, daß die beiden Elektrodenstrukturen stark unsymmetrisch zueinander angeordnet sind, so daß die Elektrodenabstände der Elektrodenpaare gering sind gegenüber den Abständen zwischen den Elektroden benachbarter Elektrodenpaare und somit auch die durch die Elektroden benachbarter Elektrodenpaare gebildeten Kapazitäten vernachlässigbar gering sind. Die Gesamtkapazität ergibt sich demnach nur aus der Summe der durch die Elektrodenpaare gebildeten Einzelkapazitäten. Aufgrund der geschilderten unsymmetrischen Anordnung wird dann eine Längen-oder Abstandsänderung $\Delta x$ in eine Kapazitätsänderung

$$C = \frac{n \cdot \varepsilon_0 \cdot F}{d1 \pm \Delta x}$$

umgesetzt, wobei n die Anzahl der Elektroden der Elektrodenstrukturen, F die Fläche des Überdeckungsbereichs der Elektroden eines Elektrodenpaares, d1 der Ausgangswert des Abstandes zwischen den Elektroden eines Elektrodenpaares und $\varepsilon_0$ die Dielektrizitätskonstante ist. Es ist ersichtlich, daß sich die Fläche F und die Anzahl n der Elektroden multiplikativ auswirken und somit insbesondere bei einer Vielfachanordnung mit äußerst geringen Elektrodenabständen d1 der Elektrodenpaare äußerst hohe Meßgenauigkeiten erzielt werden können.

Im Gegensatz zu der aus der GB-A-2195183 bekannten Lösung wird gemäß der vorliegenden Erfindung die Kapazitätsänderung also nicht durch eine Änderung der Elektrodenfläche sondern durch eine Änderung des Elektrodenabstandes erzielt. Der Meßaufnehmer wird dadurch wesentlich empfindlicher, d.h. es können mit wesentlich geringeren Längen- oder Abstandsänderungen gleich hohe Kapazitätsänderungen erreicht werden. Bei der Messung von Drehmomenten bedeutet dies einen wesentlich geringeren axialen Platzbedarf als bei dem aus der GB-A-2195183 bekannten Drehmomentensensor.

Sind die Elektrodenstrukturen durch zwei ineinandergreifende Kammstrukturen gebildet, so ergeben sich insbesondere im Hinblick auf die erforderliche Parallelschaltung der einzelnen Elektrodenpaare ein äußerst geringer Platzbedarf und eine stark vereinfachte Strukturerzeugung. Diese Vorteile können dann noch durch jeweils einstückig ausgebildete Kammstrukturen verstärkt werder. Eine weitere Steigerung mit gleichzeitiger Verbesserung der Handhabung kann dadurch erreicht werden, daß die beiden Kammstrukturen zusammen einstückig hergestellt und mechanisch und elektrisch voneinander getrennt werden. Die nach der Applikation der Kammstrukturen vorzunehmende Trennung ist dann besonders einfach durchzuführen, wenn die beiden Kammstrukturen über Schwachstellen miteinander verbunden sind.

Im Hinblick auf eine besonders einfache Herstellung und eine hohe Temperaturstabilität des Meßaufnehmers hat es sich auch als besonders günstig herausgestellt, wenn die Elektrodenstrukturen auf eine elektrisch isolierende Trägerschicht aus temperaturstabilen Material insbesondere PDFE, aufgebracht sind.

Die Vorteile des erfindungsgemäßen Meßaufnehmers mit zwei Elektrodenstrukturen kommen insbesondere dann zum Tragen, wenn die Elektrodenstrukturen durch lithographisch hergestellte Mikrostrukturen gebildet sind. Äußerst geringe Elektrodenabstände der Elektrodenpaare durch entsprechende Strukturen im Mikrometerbereich mit extrem großen Aspektverhältnissen sind insbesondere durch die Röntgentiefenlithographie in Verbindung mit der Mikrogalvanoplastik herstellbar. Einzelheiten dieser Technik sind beispielsweise dem Aufsatz von E.W. Becker, W. Ehrfeld, P. Hagmann, A. Maner und D. Münchmeyer "Herstellung von Mikrostrukturen mit großem Aspektverhältnis und großer Strukturhöhe durch Röntgentiefenlithografie mit Synchrotonstrahlung, Galvanoformung und Kunststoffabformung (LIGA-Verfahren)" KfK-Bericht 3995, Kernforschungszentrum Karlsruhe, bekannt.

Bei lithographisch hergestellten Mikrostrukturen als Elektrodenstrukturen kann dann der variable Elektrodenabstand der Elektrodenpaare einen Anfangswert von weniger als 10 Mikrometer aufweisen. Hierdurch wird eine Erfassung von Längen-oder Abstandsänderungen im Bereich von wenigen Mikrometern ermöglicht. Um möglichst viele Elektrodenpaare auf engem Raum unterbringen zu können, hat es sich als vorteilhaft erwiesen, wenn die Elektroden eine Stärke von einigen 100 Mikrometern aufweisen.

Vorzugsweise weisen die Elektroden eine Höhe von einigen 100 Mikrometern auf, wobei derartige für Mikrostrukturen relativ große Strukturhöhen mit dem genannten lithographischen Verfahren problemlos hergestellt werden können. Die relativ große Höhe der Elektroden bedeutet dann andererseits relativ große Elektrodenflächen und somit relativ große Kapazitätsänderungen der Kondensatoranordnung.

Um die Gesamtkapazität der Kondensatoranordnung als reine Funktion der zu erfassenden Längen- oder Abstandsänderung zu gewährleisten, sollten die durch einander nicht zugeordnete Elektrode gebildeten Kapazitäten vernachlässigbar gering gehalten werden. Dies wird insbesondere dann erreicht, wenn der Abstand zwischen einander nicht zugeordneten benachbarten Elektroden einen Anfangswert von einigen 100 Mikrometern aufweist.

Bei den Suche nach günstigen Abmessungen der Mikrostrukturen hat es sich auch als vorteilhaft herausgestellt, wenn die Elektroden der Elektrodenpaare sich um einige Millimeter überdecken und dadurch relativ große Flächen der Elektrodenpaare erzeugt werden.

Zum Einsatz der erfindungsgemäß ausgestalteten Meßaufnehmer für berührungslose Messung von Drehmomenten an rotierenden Wellen ist vorgesehen, daß als zu erfassende Längen- oder Abstandsänderung die in einem vorgebbaren axialen Meßabstand der Welle auftretende Torsion auf die Elektrodenstrukturen übertragbar ist. Ein besonders geringer Platzbedarf kann dabei dadurch erzielt werden, daß der axiale Meßabstand höchstens dem halben Durchmesser der Welle entspricht.

Gemäß einer weiteren bevorzugten Ausgestaltung der Erfindung sind zur Abnahme der Torsion zwei in Umfangsrichtung linienförmig auf der Welle aufliegende Klemmringe vorgesehen. Die Torsion zwischen den im axialen Meßabstand angeordneten linienförmigen Auflagen kann dann als Relativbewegung zwischen den beiden Klemmringen besonders einfach auf die Elektrodenstrukturen übertragen werden. Zweckmäßigerweise weisen die Klemmringe dann jeweils eine Abflachung auf, auf welche die zugeordnete Elektrodenstruktur elektrisch isoliert aufgebracht ist. Hierdurch wird insbesondere eine ebene Ausbildung der Elektrodenstrukturen ermöglicht.

Eine weitere Vereinfachung des Montageaufwands wird durch eine elastische Verbindung beider Klemmringe erzielt, deren Steifigkeit im Vergleich zur Steifigkeit der Welle vernachlässigbar gering ist. Durch diese elastische Verbindung der beiden Klemmringe, die vorzugsweise durch axial ausgerichtete Stifte erreicht wird, können dann die beiden Klemmringe mit den bereits darauf applizierten Elektrodenstrukturen als bauliche Einheit auf die Welle aufgesetzt werden.

Die an der Kondensatoranordnung auftretenden Kapazitätsänderungen können von der rotierenden Welle kapazitiv berührungslos abgenormen werden. Zur weiteren Vereinfachung des baulichen Aufwands wird jedoch vorzugsweise eine induktive Übertragung der Kapazitätsänderungen der Kondensatoranordnung vorgenommen. Diese lapazitive Übertragung wird dann zweckmäßigerweise durch eine axiale auf der Welle angeordnete Ringspule vorgenommen.

Entscheidende Vorteile des erfindungsgemäßen Meßaufnehmers zur berührungslosen Messung von Drehmomenten sind der äußerst geringe axiale Platzbedarf, eine hohe Überlastsicherheit, die Möglichkeit der Nachrüstung bei bereits vorhandenen Maschinen, die äußerst hohe Genauigkeit und die geringe Ansprechzeit, die auch ein Erfassen von Schwingungen ermöglicht. Andererseits kann jedoch ein Auftreten von auf die Welle einwirkenden Querkräfter oder Biegemomenten ebenfalls Änderungen der Meßkapazität hervorrufen. Das bedeutet, daß in diesem Fall im Meßsignal Drehmomente und Querkräfte bzw. Biegemomente überlagert sind.

Um nun im Meßsignal die Einflüsse von auf die Welle einwirkenden Querkräften und Biegemomenten vollständig zu eliminieren ist der Kondensatoranordnung eine zweite, in bezug auf die Achse der Welle um einen Winkel von 180° verdreht angeordnete, identische Kondensatoranordnung zugeordnet, wobei die Meßkapazität durch eine Reihenschaltung der Gesamtkapazitäten der beiden Kondensatoranordnungen gebildet ist.

Querkräfte und Biegemomente verursachen eine Verformung der Welle entsprechend der Biegelinie. Daraus resultiert normal zur Wellenachse eine Verschiebung der Relativlage der beiden Elektrodenstrukturen einer Kondensatoranordnung. Sofern diese Verschiebung parallel zu den einander gegenüberliegenden Flächen der Elektrodenpaare verläuft, hat sie keinen wesentlichen Einfluß auf das Meßsignal. Verläuft die Verschiebung jedoch senkrecht zu den einander gegenüberliegenden Flächen der Elektrodenpaare, so wird eine deutliche Änderung des Elektrodenabstandes und damit des gemessenen Torsionsweges bzw. Meßsignals hervorgerufen. Eine Trennung bzw. Kompensation dieser Querkraft- und Biegemomenteinflüsse wird durch eine zweite, identische Kondensatoranordnung erreicht, die in bezug auf die Achse der Welle um einen Winkel von 180° verdreht zu der ersten Kondensatoranordnung angeordnet ist. Wirkt nun ein Drehmoment auf die Welle, so vergrößern sich die Elektrodenabstände der beiden verdreht angeordneten Kondensatoranordnungen im gleichen Maße und damit auch die Gesamtkapazitäten der beiden Kondensatoranordnungen. Bei Einleitung einer Querkraft oder eines Biegemomentes in die Welle verringert sich demgegenüber der Elektrodenabstand der einen Kondensatoranordnung, während sich gleichzeitig der Elektrodenabstand der anderen Kondensatoranordnung in gleichem Maße vergrößert. Bei einer Reihenschaltung der Gesamtkapazitäten der beiden um einen Winkel von 180° verdreht zueinander angeordneten Kondensatoranordnungen ergibt sich somit eine exakte Kompensation der Querkraft- und Biegemomenteinflüsse, während die Meßkapazität als Maß des erfaßten Torsionsweges unverändert bleibt.

Gemäß einer Variante der Erfindung sind mindestens zwei weitere, paarweise in bezug auf die Achse der Welle um Winkel von 180° verdreht zueinander angeordnete, identische Kondensator-anordnungen vorgese-

4

EP 0 354 386 B1

hen, wobei weitere Meßkapazitäten durch Reihenschaltung der Gesamtkapazitäten einander zugeordneter Kondensatoranordnungen gebildet sind und wobei die Gesamt-Meßkapazität durch eine Parallelschaltung der einzelnen Meßkapazitäten gebildet ist. Die exakte Kompensation der Querkraftund Biegemomenteinflüsse wird auch hier jeweils durch die Reihenschaltung um Winkel von 180° verdreht zueinander angeordneter Kondensatoranordnungen ermöglicht.

Gemäß einer besonders bevorzugten Ausgestaltung der Erfindung sind zur Abnahme des Torsionsweges zwei auf der Welle im Abstand zueinander angeordnete Klemmringe vorgesehen, zwischen denen elastisch verformbare, geschlossene Rahmen zur Aufnahme jeweils einer Kondensatoranordnung angeordnet sind. Neben einer Verschiebung der beiden Klemmringe zueinander bewirken Querkräfte und Biegemomente aufgrund der Biegelinie auch eine Winkeländerung zwischen den an sich parallelen Klemmringen.

Damit diese Winkeländerung sich nicht auf die parallelen Flächen der einzelnen Elektrodenpaare überträgt und damit eine Änderung der Gesamtkapazität hervorruft, sind die Kondensatoranordnungen jeweils in dem elastisch verformbaren, geschlossenen Rahmen montiert. Dieser Rahmen kann dann so dimensioniert werden, daß noch Parallelverschiebungen in tangentialer Richtung möglich sind. Zweckmäßigerweise wird der Rahmen dann an einem Klemmring in geringem Umfang elastisch verdrehbar und am anderen Klemmring fest angebracht. Die elastisch verdrehbare Anbringung des Rahmens an dem einen Klemmring wird dabei auf besonders einfache Weise durch eine Schwachstelle dieses Klemmrings realisiert.

Im folgenden werden Ausführungsbeispiele der Erfindung anhand der Zeichnung näher erläutert.

Es zeigen

| Fig. 1 | die Erfassung der Torsion einer Welle als Maß für das übertragene Drehmoment, |
| Fig. 2 | die Abnahme der Torsion durch zwei im Abstand zueinander auf der Welle angeordnete Klemmringe, |
| Fig. 3 und 4 | in der Draufsicht bzw. in der Seitenansicht einen Meßaufnehmer für die berührungslose Messung von Drehmomenten durch mechanisch-elektrische Meßgrößenumformung mittels einer verstellbaren Kapazität, |
| Fig. 5 | die Elektrodenstrukturen der beim Meßaufnehmer gemäß den Fig. 3 und 4 als verstellbare Kapazität verwendeten Kondensatoranordnung sowie das zugeordnete Ersatzschaltbild dieser Kondensatoranordnung, |
| Fig. 6 | einen Querschnitt durch die Elektrodenstruktur gemäß Fig. 5, |
| Fig. 7 | eine Schaltungsanordnung zur induktiven Übertragung der mit dem Meßaufnehmer gemäß den Fig. 3 und 4 erfassten Kapazitätsänderungen in stark vereinfachter schematischer Darstellung, |
| Fig. 8 und 9 | das Prinzip einer exakten Kompensation von auf die Welle einwirkenden Querkräften bzw. Biegemomenten, |
| Fig. 10 | einen nach dem Prinzip gemäß Fig. 8 und 9 ausgebildeten Meßaufnehmer für die berührungslose Messung von Drehmomenten, |
| Fig. 11 und 12 | Seitenansichten der beiden 180° verdreht angeordneten Kondensatoranordnungen des in Fig. 10 dargestellten Meßaufnehmers, |
| Fig. 13 | eine Reihenschaltung der in den Fig. 11 und 12 dargestellten Kondensatoranordnungen, |
| Fig. 14 | das Ersatzschaltbild der Reihenschaltung gemäß Fig. 13, |
| Fig. 15 | das Prinzip eines Meßaufnehmers für die berührungslose Messung von Drehmomenten mit insgesamt vier Kondensatoranordnungen, |
| Fig. 16 | das Ersatzschaltbild des Meßaufnehmers gemäß Fig. 15 und |
| Fig. 17 | einen Meßaufnehmer für die berührungslose Messung von Drehmomenten mit zwei um 180° verdrehten Kondensatoranordnungen in perspektivischer Darstellung. |

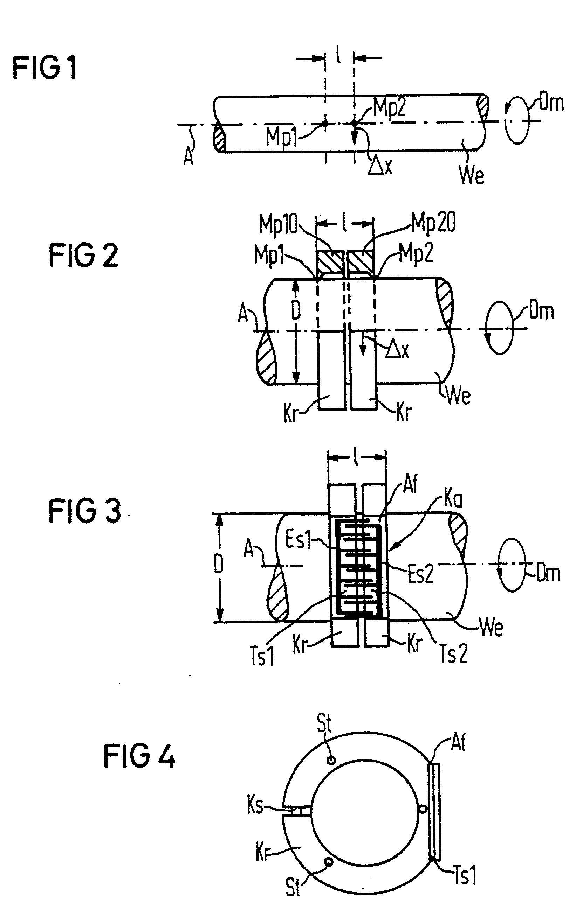

Fig. 1 zeigt eine um die Achse A drehbare Welle We, auf deren Umfangsfläche zwei im axialen Meßabstand 1 liegende Meßpunkte Mp1 und Mp2 angeordnet sind. Wird nun durch die Welle We ein durch den Pfeil Dm angedeutetes Drehmoment übertragen, so bildet die zwischen den Meßpunkten Mp1 und Mp2 auftretende Torsion der Welle We ein Maß für das Drehmoment Dm. In Fig. 1 ist diese dem Drehmoment Dm proportionale Torsion durch die zwischen den Meßpunkten Mp1 und Mp2 in Umfangsrichtung auftretende Längenänderurg Δx aufgezeigt.

Gemäß Fig. 2 werden zur Abnahme der in Fig. 1 aufgezeigten Torsion Δx zwei mir Kr bezeichnete Klemmringe auf der Welle We derart befestigt, daß ihre in Umfangsrichtung linienförmigen Auflagen des axialen Meßabstand 1 aufweisen. Die Torsion Δx zwischen den Meßpunkten Mp1 und Mp2 kann dann als zwischen den Klemmringen Kr auftretende Relativbewegung in Umfangsrichtung abgenommen werden. Bei Übertragung eines Drehmomentes Dm durch die Welle We verdrehen sich also die auf den Klemmringen Kr dargestellten

5

EP 0 354 386 B1

Meßpunkte Mp10 und Mp20 um die Torsion $\Delta x$ gegeneinander.

Gemäß den Fig. 3 und 4 sind die beiden Klemmringe Kr mit Abflachungen Af versehen, auf welchen die Elektrodenstrukturen Es1 und Es2 einer insgesamt mit Ka bezeichneten Kondensatoranordnung aufgebracht sind. Die beiden als ineinandergreifende Kammstrukturen ausgebildete Elektrodenstrukturen Es1 und Es2 befinden sich auf elektrisch isolierenden Trägerschichten Ts1 bzw. Ts2, die aus einem temperaturstabilen Material, insbesondere PTFE, bestehen. Es ist ferner zu erkennen, daß die beiden Klemmringe Kr über drei gleichmäßig über den Umfang verteilte, axial ausgerichtete Stifte St elastisch miteinander verbunden sind, so daß sie mit den bereits aufgebrachten Elektrodenstrukturen Es1 bzw. Es2 als bauliche Einheit auf die Welle We aufgesetzt und mit Hilfe von Klemmschrauben Ks festgeklemmt werden können. Um die Messung der Torsion nicht zu verfälschen, muß die durch die Stifte St hergestellte elastische Verbindung der beiden Klemmringe Kr eine Steifigkeit aufweisen, die im Vergleich zur Steifigkeit der Welle We vernachlässigbar gering ist.

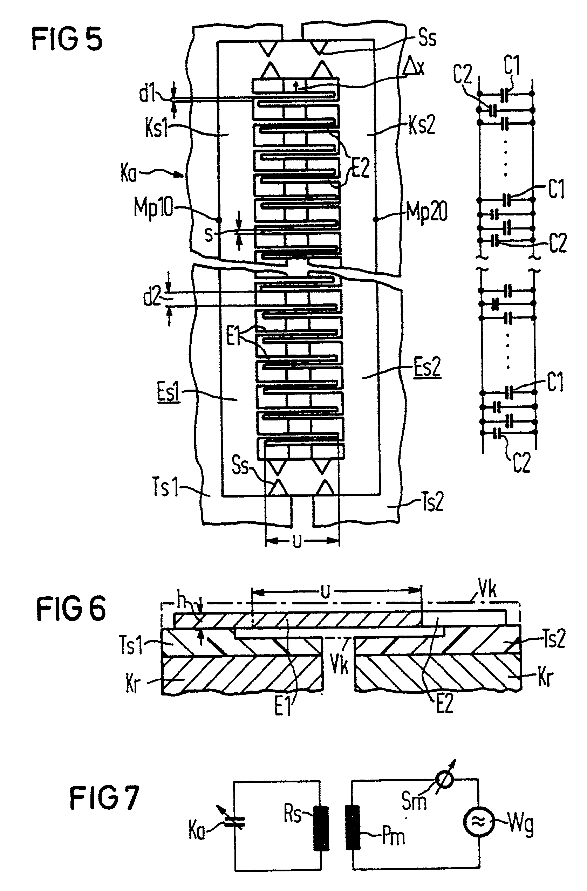

Zur Erläuterung des Aufbaus und der Wirkungsweise der Kondensatorarordnung Ka wird zusätzlich auf die Fig. 5 und 6 verwiesen. Insbesondere Fig. 5 zeigt, daß die Elektrodenstruktur Es1 durch einen Kammsteg Ks1 und eine Vielzahl von in gleichmäßiger Teilung parallel im Abstand zueinander angeordneter und in axialer Richtung senkrecht vom Kammsteg Ks1 wegstehenden Elektroden E1 besteht. Die Elektrodenstruktur Es1 ist datei derart auf der Trägerschicht Ts1 angeordnet, daß die freien Enden der einzelnen Elektroden E1 über den Rand des zugeordneten Klemmringes Kr hinausragen. Die zweite, gleichartig ausgebildete Elektrodenstruktur Es2, die aus einem Kammsteg Ks2 und einer Vielzahl von Elektroden E2 besteht, ist in entsprechender Weise auf der Trägerschicht Ts2 derart angeordnet, daß die freien Enden der einzelnen Elektroden E2 über den Rand des zugeordneten Klemmringes Kr hinausragen und in die Zwischenräume zwischen den Elektroden E1 der ersten Elektrodenstruktur Es1 eingreifen. Die beiden ineinandergreifenden, kammförmigen Elektrodenstrukturen Es1 und Es2 sind dabei stark unsymmetrisch zueinander angeordnet, so daß jeweils zwischen paarweise einander zugeordneten, benachbarten Elektroden E1 und E2 ein geringer Abstand d1 besteht, der klein ist gegenüber dem Abstand d2 zwischen einander nicht zugeordneten, benachbarten Elektroden E1 und E2. Dementsprechend sind die über die Abstände d2 gebildeten Kapazitäten C2 vernachlässigbar gering gegenüber den über die Abstände d1 der Elektrodenpaare gebildeten Kapazitäten C1. Wie gemäß Fig. 5 aus dem zugeordneten Ersatzschaltbild mit den Kapazitäten C1 und C2 zu erkennen ist, ergibt sich die Gesamtkapazität der Kondensatoranordnung Ka durch die Parallelschaltung der Elektrodenpaare aus der Summe der Einzelkapazitäten C1, gegenüber der die Summe der Einzelkapazititen C2 zu vernachlässigen ist.

Durch die bereits im Zusammenhang mit der Fig. 3 erwähnten Meßpunkte Mp10 und Mp20 ist in Fig. 5 angedeutet, daß sich die beiden auf den Klemmringen Kr angeordneten Elektrodenstrukturen Es1 und Es2 um die Torsion $\Delta x$ parallel zueinander verschieben. Die Torsion $\Delta x$ wird dann in eine Kapazitätsänderung

$$C = \frac{n \cdot \varepsilon_0 \cdot F1}{d1 \pm \Delta x}$$

umgesetzt, wobei n die Anzahl der Elektroden E1 bzw. E2, F1 die Fläche des Überdeckungsbereichs u der Elektroden E1 und E2 eines Elektrodenpaares, d1 der bereits vorstehend erwähnte Ausgangswert des Abstandes zwischen den Elektroden E1 und E2 eines Elektrodenpaares und $\varepsilon_0$ die Dielektrizitätskonstante ist.

Um einen hinreichend großen Meßeffekt zu erzielen, sollte der Abstand d1 nicht wesentlich größer als die Torsion $\Delta x$ sein. Bei der Welle We eines Elektromotors mit einem Durchmesser D = 60 mm und einem axialen Meßabstand 1 = 30 mm beträgt die Torsion bei Nenndrehmoment beispielsweise $\Delta x = 2\ \mu m$, so daß hier beispielsweise für den Abstand d1 ein Wert von ca. 5 Mikrometern angebracht ist. Mulitplikativ wirkt sich die Fläche F des Überdeckungsbereichs u der Elektroden E1 und E2 eines Elektrodenpaares und die Anzahl n der Elektrodenpaare aus. Große Flächen F bedeuten jedoch eine große Höhe h (vgl. Fig. 6) der Elektrodenstrukturen Es1 und Es2. In Verbindung mit den äußerst geringen Abständen d1 resultieren daraus Elektrodenstrukturen Es1 und Es2 im Mikrometerbereich mit extrem großen Aspektverhältnissen. Derartige Strukturen sind durch die Röntgentiefenlithographie in Verbindung mit der Mikrogalvanoplastik herstellbar, wobei hier als Werkstoff beispielsweise Nickel geeignet ist. Die Strukturen können jedoch auch aus Silizium bestehen und durch die sogenannte Silizium-Mikromechanik, d.h. durch anisotropes Ätzen von Silizium hergestellt werden.

Bei einer Torsion $\Delta x$ im Bereich von 1 bis 5 Mikrometern hat sich beispielsweise folgende Strukturdimensionierung bewährt:

Anzahl der Elektrodenpaare n = 35

6

EP 0 354 386 B1

```
Abstand zwischen Elektroden E1 und
E2 eines Elektrodenpaares                        d1 = 5 µm
Abstand zwischen einander nicht zuge-
ordneten benachbarten Elektroden E1 und E2  d2 = 300 µm
Höhe einer Elektrode E1 oder E2                  h = 500 µm
Stärke einer Elektrode E1 oder E2                s = 300 µm
Länge der Überdeckung der Elektroden
E1 und E2                                        u = 5 mm
```

Mit den vorstehenden Strukturdimensionierungen konnte bei einer Welle We mit einem Durchmesser D = 60 mm und einem axialen Meßabstand 1 = 30 mm eine Kapazitätsänderung C von ca. 100 pF erzielt werden, wobei die Kapazität der Kondensatoranordnung Ka von etwa 100 pF ohne Belastung durch ein Drehmoment Dm auf etwa 200 pF bei Nenndrehmoment anstieg. Die Änderung des Meßsignals liegt hier also bei etwa 100% während bei der Messung von Drehmomenten mittels Dehnungsmeßstreifen die entsprechenden Änderungen nur im Promillebereich liegen.

Die beiden Elektrodenstrukturen Es1 und Es2 werden zweckmäßigerweise als ein einziges Teil hergestellt und nach der elektrisch isolierten Befestigung auf den durch die Stifte St miteinander verbundenen Klemmringen Kr mechanisch und elektrisch voneinander getrennt. Die Trennung erfolgt dabei zweckmäßigerweise über aus Fig. 5 ersichtliche Schwachstellen Ss, welche im Bereich der Querverbindungen zwischen den Kammstegen Ks1 und Ks2 angeordnet sind.

Das Ineinandergreifen der Elektroden E1 und E2 der Elektrodenstrukturen Es1 und Es2 ohne Beeinträchtigung ihrer Verstellbarkeit durch die Torsion Δx geht insbesondere aus Fig. 6 hervor. Es ist zu erkennen, daß durch geringe Abstufungen der Trägerschichten Ts1 und Ts2 im Überdeckungsbereich der Elektroden E1 und E2 eine reibungsfreie Verstellung gewährleistet ist. Fig. 6 zeigt ferner durch strichpunktierte Linien eine hermetische Verkapselung der Gesamtanordnung mit den Elektroden E1 und E2 auf. Diese Verkapselung Vk verhindert den Zutritt von Feuchtigkeit und Staub und damit eine eventuelle Verfälschung der Messung.

Fig. 7 zeigt in stark vereinfachter schematischer Darstellung das Schaltungsprinzip für die berührungslose induktive Übertragung der mit dem Meßaufnehmer gemäß den Fig. 3 und 4 erfassten Kapazitätsänderungen C. Es ist zu erkennen, daß die Kondensatoranordnung Ka parallel an eine Ringspule Rs angeschlossen ist, wobei diese Ringspule Rs neben den beiden in Fig. 3 dargestellten Klemmringen Kr auf die Welle We aufgesetzt ist. Über einer fest angeordneten Primärspule Pm wird der Parallelresonanzkreis auf der Welle We, bestehend aus der Kondensatoranordnung bzw. Meßkapazität Ka und der Induktivität der Ringspule Rs in Resonanz gebracht. Aus der Resonanzfrequenz ergibt sich dann eindeutig die Größe der Meßkapazität Ka und damit das Drehmoment Dm. Zur Erfassung der Resonanz dient dabei ein Strommeßgerät Sm, das mit der Primärspule Pm und einem Wechselstromgenerator Wg in Reihe geschaltet ist.

Mit der vorstehend beschriebenen Meßaufnehmer kann das über die Welle We übertragene Drehmoment Dm und damit auch die mechanische Leistung mit einer hohen Genauigkeit von weniger als ± 1% in einem Temperaturbereich von –40°C bis 200°C gemessen werden. Bei einem gegenüber bekannten Meßaufnehmern äußerst geringen Platzbedarf sind als weiterer Vorteil auch noch die geringen Herstellkosten hervorzuheben. Von den zahlreicher Variationsmöglichkeiten im Rahmen des Erfindungsgedankens ist insbesondere die direkte, elektrisch isolierte Aufbringung der Elektrodenstrukturen auf eine Welle oder auf ein anderes zu vermessendes Objekt hervorzuheben.

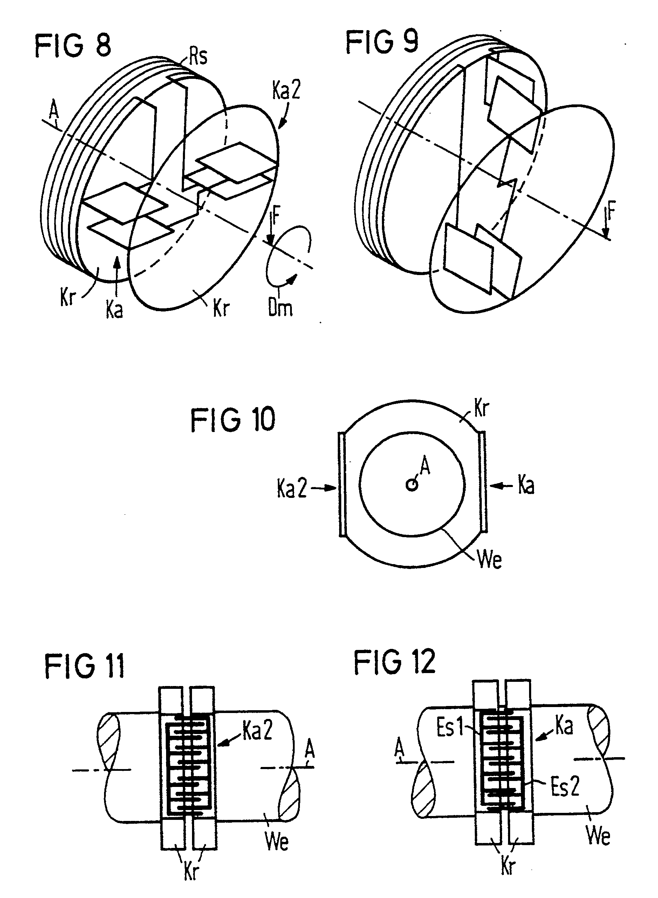

Im folgenden werden anhand der Fig. 8 bis 17 Ausführungsbeispiele von Meßaufnehmern für die berührungslose Messung von Drehmomenten beschrieben, bei welchen die Einflüsse von Querkräften und Biegemomenten vollständig eliminiert werden.

Querkräfte und Biegemomente verursachen eine Verformung der Welle entsprechend der Biegelinie. Daraus resultiert normal zur Achse der Welle eine Verschiebung der Relativlage der beiden Klemmringe, die die Torsion von der Welle abnehmen.

Fig. 8 zeigt in stark vereinfachter schematischer Darstellung eine Kondensatoranordnung Ka, deren nicht näher bezeichnete Elektroden jeweils an einem Klemmring Kr angebracht sein sollen. Bei Einleitung einer senkrecht zu den Elektrodenflächen der Kondensatoranordnung Ka verlaufenden Querkraft F oder eines entsprechenden Biegemoments ergibt sich eine wesentliche Änderug des Elektrodenabstandes und damit der Gesamtkapazität der Kondensatoranordnung Ka. Eine Trennung bzw. Kompensation zur Querkraft- und Biegemomenteinflüsse wird durch eine zweite, identische Kondensatoranordnung Ka2 erreicht, die in bezug auf die Achse A um einen Winkel von 180° verdreht zur Kondensatoranordnung Ka angeordnet ist. Die Kondensatoranordnung Ka könnte also durch eine Drehung um 180° um die Achse A die Lage der zweiter Kondensatoranordnung Ka2 einnehmen. Es ist ersichtlich, daß durch eine Reihenschaltung der Gesamtkapazität der Kondensatoranordnung Ka und der Gesamtkapazität der zweiten Kondensatoranordnung Ka2 eine Meßkapazität gebildet wird, welche an die axiale Ringspule Rs angeschlossen ist. Wirkt nun ein Drehmoment Dm auf die Welle, so vergrößern sich die Elektrodenabstände und damit die Gesamtkapazitäten der Kondensatoranordnung Ka und Ka2 in gleichem Maße. Bei der in Fig. 8 dargestellten Einleitung der Querkraft F oder eines entsprechenden Biegemoments vergrößert sich der Elektrodenabstand der Kondensatoranordnung Ka, der Elektrodenabstand der zweiten Kondensatoranordnung Ka2 verkleinert sich jedoch in gleichem Maße. Durch die Reihenschaltung der Kondensatoranordnungen Ka und Ka2 ergibt sich somit eine exakte Kompensation, d.h. die durch die aufgezeigte Reihenschaltung gebildete Meßkapazität bleibt durch den Einfluß der Querkraft F unverändert.

Fig. 9 zeigt den Einfluß der Querkraft F in einer zur Lage der Fig. 8 um 90° verdrehten Lage der Kondensatoranordnung Ka und Ka2. In dieser Lage bewirkt die Querkraft F die stark übertrieben dargestellte Verschiebung parallel zu den Elektrodenflächen der Kondensatoranordnungen Ka und Ka2. Da die Flächen der Kapazitäten mit Flächenänderungen von weniger als ein Promille nur minimal verringert werden, ergibt sich kein merklicher oder störender Einfluß auf die Meßkapazität.

Die Fig. 10 bis 12 zeigen die praktische Anwendung des in Fig. 8 aufgezeigten Prinzips. Dabei zeigt Fig. 10 die Anbringung der Kondensatoranordnung Ka auf Klemmringen Kr in einer weitgehend ähnlichen Weise, wie es in Fig. 4 dargestellt ist. Abweichend von der Darstellung gemäß Fig. 4 ist jedoch gemäß Fig. 10 eine zweite, in bezug auf die Achse A der Welle We um einen Winkel von 18% verdreht angeordnete, identische Kondensatoranordnung Ka2 vorgesehen. Fig. 11 zeigt eine Draufsicht auf diese zweite Kondensatoranordnung Ka2, während Fig, 12 eine Draufsicht auf die Kondensatoranordnung Ka zeigt. Es ist erkennbar, daß die Kondensatoranordnung Ka durch eine Drehung um 180° um die Achse A der Welle We in die Lage der zweiten Kondensatoranordnung Ka2 überführt werden könnte.

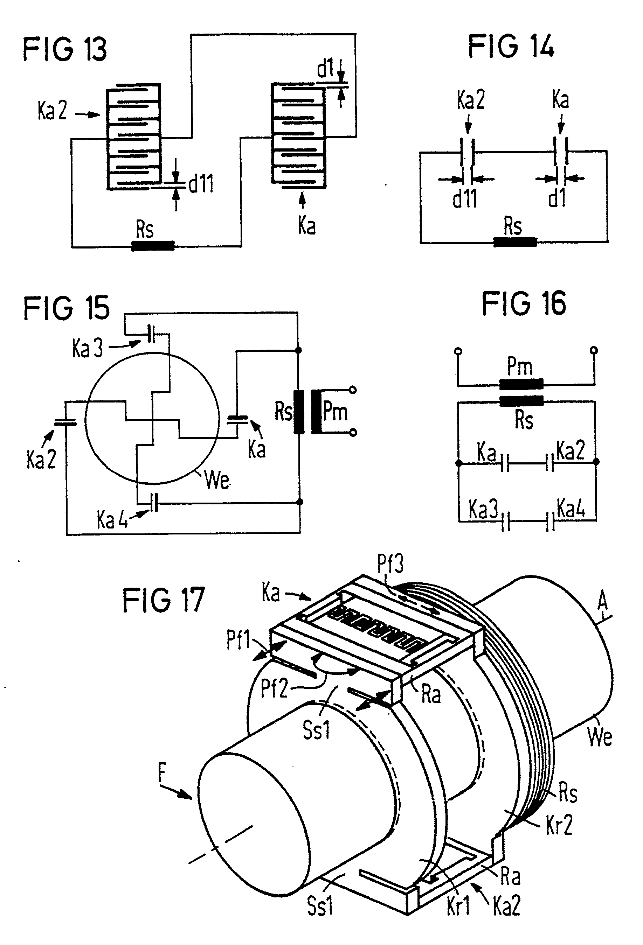

Fig. 13 zeigt die Schaltung der in den Fig. 11 und 12 dargestellten Kondensatoranordnungen Ka2 und Ka. Es ist erkennbar, daß die Kondensatoranordnungen Ka2 und Ka in Reihe geschaltet sind und daß die aus dieser Reihenschaltungen resultierende Meßkapazität parallel an die bereits im Zusammenhang mit den Fig. 7, 8 und 9 erwähnte Ringspule Rs angeschlossen ist. Der Elektrodenabstand der Kondensatoranordnung Ka ist mit d1 bezeichnet (vgl. Fig. 5), während der Elektrodenabstand der Kondensatoranordnung Ka2 mit d11 bezeichnet ist. Aus dem in Fig. 8 aufgezeigten Prinzip und aus den geometrischen Bedingungen der Anbringung der Kondensatoranordnungen Ka und Ka2 gemäß den Fig. 10 bis 12 ergibt sich, daß bei einer Vergrößerung des Elektrodenabstandes d1 um $\Delta$ d sich gleichzeitig der Elektrodenabstand d11 um $\Delta$d verringert und umgekehrt. Für das in Fig. 14 dargestellte Ersatzschaltbild ergibt sich die Kapazität C gemäß folgender Beziehung

$$ C = \varepsilon. \cdot \varepsilon_r \cdot \frac{F1}{(d11 + \Delta d) + (d1 - \Delta d)} $$

wobei $\varepsilon.$ die absolute Dielektrizitätskonstante, $\varepsilon_r$ die relative Dielektrizitätskonstante und F1 die Fläche des Überdeckungsbereichs der Elektroden ist. Aus diesem Zusammenhang ist besonders deutlich erkennbar, daß durch Querkräfte oder Biegemomente hervorgerufene Abstandsänderungen vollständig kompensiert bzw. eliminiert werden.

Fig. 15 zeigt, daß das in Fig. 8 aufgezeigte Prinzip der Kompensation von auf die Welle We einwirkenden Querkräften oder Biegemomenten auch mit mehr als zwei Kondensatoranordnungen realisiert werden kann. Dabei sind die Kondensatoranordnungen Ka und Ka2 wie bisher um 180° verdreht zueinander angeordnet und in Reihe geschaltet, wobei die hieraus resultierende Meßkapazität parallel an die Ringspule Rs angeschlossen ist. Zwei weitere, identische Kondensatoranordnungen Ka3 und Ka4 — die gegenüber den Kondensatoranordnungen Ka und Ka2 um 90° verdreht angeordnet sind — sind ebenfalls um 180° verdreht zueinander angeordnet und in Reihe geschaltet, wobei die hieraus resultierende Meßkapazität wiederum parallel an die Ringspule Rs angeschlossen ist. Die in Fig. 15 verschieden stark dargestellten Elektroden der rein schematisch aufgezeigten Kondensatoranordnungen Ka, Ka2, Ka3 und Ka4 verdeutlichen die geometrischen Bedingungen der verdrehten Anordnungen bzw. der Anbringung an die hier nicht dargestellten Klemmringe. Die Meßwertübertragung erfolgt auch bei dieser Anordnung wieder über die auf der Welle We angeordnete axiale Ringspule Rs, mit der hier die Gesamt-Meßkapazität einen Parallelresonanzkreis bildet. Dieser wird von der feststehenden Primärspule Pm induktiv angeregt und über die Resonanzfrequenz das Drehmoment auf der Welle We bestimmt.

Fig. 16 zeigt das Ersatzschaltbild der in Fig. 15 dargestellten Anordrung. Es ist erkennbar, daß auch weitere

EP 0 354 386 B1

Kondensatoranordnungen paarweise hinzugefügt werden können, sofern diese um 180° verdreht zueinander auf der Welle We (vgl. Fig. 15) angeordnet und in Reihe geschaltet werden, wobei die resultierende Meßkapazität wiederum parallel an die Ringspule Rs angeschlossen wird.

Fig. 17 zeigt einen Meßaufnehmer für die berührungslose Messung von Drehmomenten mit zwei um 180° verdrehten, identischen Kondensatoranordnungen Ka und Ka2 in perspektivischer Darstellung. Die beiden auf der Welle We im axialen Abstand zueinander angeordneten Klemmringe sind hier mit Kr1 und Kr2 bezeichnet. Die Ringspule Rs ist unmittelbar hinter dem Klemmring Kr2 auf der Welle We angeordnet.

Eine auf die Welle We einwirkende Querkraft F bewirkt neben der bereits erörterten Verschiebung der beiden Klemmringe Kr1 und Kr2 zueinander aufgrund der Biegelinie auch eine Winkeländerung zwischen den an sich parallelen Klemmringen Kr1 und Kr2. Damit diese Winkeländerungen sich nicht auf die parallelen Elektrodenflächen der Kondensatoranordnungen Ka und Ka2 übertragen und damit eine Kapazitätsänderung hervorrufen, wird jede der Kondensatoranordnungen Ka und Ka2 in einem zugeordneten geschlossenen Rahmen Ra montiert. Diese Rahmen Ra sind so dimensioniert, daß noch Parallelverschiebungen in tanginaler Richtung mäglich sind. Eine feste Verbindung am Klemmring Kr2 sowie eine leichte Verdrehungen erlaubende Verbindung am Klemmring Kr1 gewährleisten, daß auch bei Querkräften F oder Biegemomenten eine parallele Anordnung der Elektroden der Kondensatoranordnungen Ka und Ka2 aufrechterhalten bleibt. Die geringfügige Verdrehbarkeit wird im dargestellten Ausführungsbeispiel durch eine Schwachstelle Ss1 am Klemmring Kr1 geschaffen, wobei die nicht näher bezeichneten Schlitze zur Bildung dieser Schwachstelle Ss1 parallel zum Rahmen Ra in den Klemmring Kr1 eingebracht sind. Die verschiedenen Bewegungsmöglichkeiten der dargestellten Rahmenanordnung sind durch Pfeile Pf1, Pf2 und Pf3 aufgezeigt.

## Patentansprüche

1. Meßaufnehmer mit kapazitivem Wandler für Längen- oder Abstandsänderungen, insbesondere für berührungslose Messung von Drehmomenten an rotierenden Wellen, folgende Merkmale :
— die elektrisch voneinander isolierten Elektrodenstrukturen (Es1, Es2) einer Kondensatoranordnung (Ka) sind durch die zu erfasende Längen- oder Abstandsänderung ($\Delta$x) parallel zueinander verstellbar,
— die eine Elektrodenstruktur (Es1) besteht aus mehreren ebenen, parallel im Abstand zueinander angeordneten Elektroden (E1) zwischen denen die Elektroden (E2) der zweiten gleichartigen Elektrodenstruktur (Es2) angeordnet sind,
— die Gesamtkapazität der Kondensatoranordnung (Ka) ist durch Parallelschaltung einzelner Elektrodenpaare bestimmt, die jeweil durch eine Elektrode (E1) der einen Elektrodenstruktur (Es1) und eine zugeordnete, benachbarte Elektrode (E2) der zweiten Elektrodenstruktur (Es2) gebildet sind,
— der entsprechend der zu erfassenden Längen- oder Abstandsänderung ($\Delta$x) variable Elektrodenabstand (d1) der Elektrodenpaare ist innerhalb des gesamten Meßbereichs klein gegenüber dem Abstand (d2) zwischen einander nicht zugeordneten, benachbarten Elektroden (E1, E2) der beiden Elektrodenstrukturen (Es1, Es2).

2. Meßaufnehmer nach Anspruch 1, **dadurch gekennzeichnet**, daß die Elektrodenstrukturen (Es1, ES2) durch zwei ineinandergreifende Kammstrukturen gebildet sind.

3. Meßaufnehmer nach Anspruch 2, **dadurch gekennzeichnet**, daß die Kammstrukturen jeweils einstückig ausgebildet sind.

4. Meßaufnehmer nach Anspruch 2, **dadurch gekennzeichnet**, daß die beiden Kammstruckturen zusammen einstückig herstellbar und mechanisch und elektrisch voneinander trennbar sind.

5. Meßaufnehmer nach Anspruch 4, **dadurch gekennzeichnet**, daß die beiden Kammstrukturen über Schwachstellen (Ss) trennbar miteinander verbunden sind.

6. Meßaufnehmer nach einem der vorhergehenden Ansprüche, **dadurch gekennzeichnet**, daß die Elektrodenstrukturen (Es1, Es2) auf eine elektrisch isolierende Trägerschicht (Ts1, Ts2) aus temperaturstabilem Material aufgebracht sind.

7. Meßaufnehmer nach Anspruch 6, **dadurch gekennzeichnet**, daß die Trägerschicht (Ts1, Ts2) aus PTFE besteht.

8. Meßaufnehmer nach einem der vorhergehenden Ansprüche, **dadurch gekennzeichnet**, daß die Elektrodenstrukturen (Es1, Es2) durch lithographisch hergestellte Mikrostrukturen gebildet sind.

9. Meßaufnehmer nach einem der vorhergehenden Ansprüche, **dadurch gekennzeichnet**, daß der variable Elektrodenabstand (d1) der Elektrodenpaare einen Anfangswert von weniger als 10 Mikrometer aufweist.

10. Meßaufnehmer nach Anspruch 9, **dadurch gekennzeichnet**, daß der Elektrodenabstand (d1) der Elektrodenpaare in einem Bereich von wenigen Mikrometern verstellbar ist.

11. Meßaufnehmer nach einem der vorhergehenden Ansprüche, **dadurch gekennzeichnet**, daß die Elek-

9

troden (E1, E2) eine Stärke (S) von einigen hundert Mikronetern aufweisen.

12. Meßaufnehmer nach einem der vorhergehenden Ansprüche, **dadurch gekennzeichnet,** daß die Elektroden (E1, E2) eine Höhe (h) von einigen hundert Mikrometern aufweisen.

13. Meßaufnehmer nach einem der vorhergehenden Ansprüche, **dadurch gekennzeichnet,** daß der Abstand (d2) zwischen einander nicht zugeordneten benachbarten Elektroden (E1, E2) einen Anfangswert von einigen hundert Mikrometern aufweist.

14. Meßaufnehme nach einem der vorhergehenden Ansprüche, **dadurch gekennzeichnet,** daß die Elektroden (E1, E2) der Elektrodenpaare um einige Millimeter ineinandergreifen

15. Meßaufnehmer nach einem der vorhergehenden Ansprüche für berührungslose Messung von Drehmomenten an rotierenden Wellen, **dadurch gekennzeichnet,** daß als zu erfassende Längen- oder Abstandsänderung (Δx) die in einem vorgebbaren axialen Meßabstand (1) der Welle (We) auftretende Torsion auf die Elektrodenstrukturen (Es1, Es2) übertragbar ist.

16. Meßaufnehmer nach Anspruch 15, **dadurch gekennzeichnet,** daß zur Abnahme der Torsion zwei in Umfangsrichtung linienförmig auf der Welle (We) aufliegende Klemmringe (Kr) vorgesehen sind.

17. Meßaufnehmer nach Anspruch 16, **dadurch gekennzeichnet,** daß die Klemmringe (Kr) jeweils eine Abflachung (Af) aufweisen, auf welche zugeordnete je eine Elektrodenstruktur (Es1, Es2) elektrisch isoliert aufgebracht ist.

18. Meßaufnehmer nach einem der Ansprüche 15 bis 17, **gekennzeichnet durch** eine induktive Übertragung der Kapazitätsänderungen der Kondensatoranordnung.

19. Meßaufnehmer nach Anspruch 18, **dadurch gekennzeichnet,** daß zur induktiven Übertragung eine auf der axialen Welle (We) angeordnete Ringspule (Rs) vorgesehen ist.

20. Meßaufnehmer nach einem der vorhergehenden Ansprüche für berührungslose Messung von Drehmomenten an rotierenden Wellen, **dadurch gekennzeichnet,** daß der Kondensatoranordnung (Ka) eine zweite, in bezug auf die Achse (A) der Welle (We) um einen Winkel von 180° verdreht anzuordnende, identische Kondensatoranordnung (Ka2) zugeordnet ist und daß die Meßkapazität durch eine Reihenschaltung der Gesamtkapazitäten der beiden Kondensatoranordnungen (Ka, Ka2) gebildet ist.

21. Meßaufnehmer nach Anspruch 20, **dadurch gekennzeichnet,** daß mindestens zwei weitere, paarweise in bezug auf die Achse (A) der Welle (We) um Winkel von 180° verdreht zueinander anzuordnende, identische Kondensatoranordnungen (Ka3, Ka4) vorgesehen sind, wobei weitere Meßkapazitäten durch Reihenschaltung der Gesamtkapazitäten einander zugeorndeter Kondensatoranordnungen (Ka3, Ka4) gebildet sind und daß die GesamtMeßkapazität durch eine Parallelschaltung der einzelnen Meßkapazitäten gebildet ist.

22. Meßaufnehmer nach Anspruch 20 oder 21, **dadurch gekennzeichnet,** daß zur Abnahme des Torsionsweges (Δx) zwei auf der Welle (We) im Abstand zueinander anzuordnende Klemmringe (Kr1, Kr2) vorgesehen sind, zwischen denen elastisch verformbare, geschlossene Rahmen (Ra) zur Aufnahme jeweils einer Kondensatoranordnung (Ka, Ka1) angeordnet sind.

23. Meßaufnehmer nach Anspruch 22, **dadurch gekennzeichnet,** daß der Rahmen (Ra) an einem Klemmring (Kr1) in geringem Umfang elastisch verdrehbar und am anderen Klemmring (Kr2) fest angebracht ist.

24. Meßaufnehmer nach Anspruch 23, **dadurch gekennzeichnet,** daß die elastisch verdrehbare Anbringung des Rahmens (Ra) an dem einen Klemmring (Kr1) durch eine Schwachstelle (Ss1) dieses Klemmringes (Kr1) realisiert ist.

25. System, bestehend aus einer Welle und einem Meßaufnehmen nach einem der vorhergehenden Ansprüche für berührungslose Messung von Drehmomenten an rotierenden wellen, **dadurch gekennzeichnet,** daß der axiale Meßabstand (1) höchstens dem halben Durchmesser (D) der Welle (We) entspricht.

26. System, bestehend aus einer Welle und einem Meßaufnehmer nacheinem der vorhergehenden Ansprüche für berührungslose Messung von Drehmomenten an rotierenden wellen, **gekennzeichnet durch** eine elastische Verbindung beider Klemmringe (Kr), deren Steifigkeit im Vergleich zur Steifigkeit der Welle (We) vernachläßigbar gering ist.

27. System nach Anspruch 26 **dadurch gekennzeichnet,** daß die Klemmringe (Kr) durch axial ausgerichtete stifte (St) elastisch miteinander verbunden sind.

## Claims

1. Measurement sensor having a capacitive transducer for length or distance changes, preferably for the contact-free measurement of torques on rotating shafts, having the following features :

— the mutually electrically insulated electrode structures (Es1, Es2) of a capacitor arrangement (Ka) can be displaced parallel to one another by the length or distance change (Δx) to be detected,

EP 0 354 386 B1

— one electrode structure (Es1) consists of a plurality of flat electrodes (E1) arranged at a distance parallel to one another, between which the electrodes (E2) of the second electrode structure (Es2), which is of the same type, are arranged,

— the total capacitance of the capacitor arrangement (Ka) is determined by the parallel circuit of individual electrode pairs which in each case are formed by one electrode (E1) of one electrode structure (Es1) and an associated, adjacent electrode (E2) of the second electrode structure (Es2),

— the electrode distance (d1), which is variable in accordance with the length or distance change ($\Delta x$) to be detected is small within the whole measurement range with respect to the distance (d2) between non-associated, adjacent electrodes (E1, E2) of the two electrode structures (Es1, Es2).

2. Measurement sensor according to Claim 1, characterised in that the electrode structures (Es1, Es2) are formed by two interlocking comb structures.

3. Measurement sensor according to Claim 2, characterised in that the comb structures are in each case formed in one piece.

4. Measurement sensor according to Claim 2, characterised in that the two comb structures can be produced together in one piece, and can be mechanically and electrically separated from one another.

5. Measurement sensor according to Claim 4, characterised in that the two comb structures are connected to one another in a separable manner via weak points (Ss).

6. Measurement sensor according to one of the preceding claims, characterised in that the electrode structures (Es1, Es2) are mounted on an electrically insulating carrier layer (Ts1, Ts2) of temperature-stable material.

7. Measurement sensor according to Claim 6, characterised in that the carrier layer (Ts1, Ts2) consists of PTFE.

8. Measurement sensor according to one of the preceding claims, characterised in that the electrode structures (Es1, Es2) are formed by lithographically produced microstructures.

9. Measurement sensor according to one of the preceding claims, characterised in that the variable electrode distance (d1) of the electrode pairs has an initial value of less than 10 micrometres.

10. Measurement sensor according to Claim 9, characterised in that the electrode distance (d1) of the electrode pairs can be displaced in a range of a few micrometres.

11. Measurement sensor according to one of the preceding claims, characterised in that the electrodes (E1, E2) have a thickness (S) of a few hundred micrometres.

12. Measurement sensor according to one of the preceding claims, characterised in that the electrodes (E1, E2) have a height (h) of a few hundred micrometres.

13. Measurement sensor according to one of the preceding claims, characterised in that the distance (d2) between mutually non-associated, adjacent electrodes (E1, E2) has an initial value of a few hundred micrometres.

14. Measurement sensor according to one of the preceding claims, characterised in that the electrodes (E1, E2) of the electrode pairs interlock by a few millimetres.

15. Measurement sensor according to one of the preceding claims for the contact-free measurement of torques on rotating shafts, characterised in that the torsion arising at a presettable axial measuring distance (1) of the shaft (We) can be transferred onto the electrode structures (Es1, Es2) as the length or distance change ($\Delta x$) to be detected.

16. Measurement sensor according to Claim 15, characterised in that two clamping rings (Kr) located linearly in the circumferential direction on the shaft (We), are provided, for detecting the torsion.

17. Measurement sensor according to Claim 16, characterised in that the clamping rings (Kr) in each case have a flattened area (Af), on which one of the two associated electrode structures (Es1, Es2) is mounted, in an electrically insulated manner in each case.

18. Measurement sensor according to one of Claims 15 to 17, characterised by an inductive transmission of the capacitance changes of the capacitor arrangement.

19. Measurement sensor according to Claim 18, characterised in that an annular coil (Rs) arranged on the axial shaft (We) is provided for the inductive transmission.

20. Measurement sensor according to one of the preceding claims for the contact-free measurement of torques on rotating shafts, characterised in that the capacitor arrangement (Ka) is associated with a second, identical capacitor arrangement (Ka2) to be arranged rotated through an angle of 180° with respect to the axis (A) of the shaft (We), and in that the measurement capacitance is formed by a series circuit of the total capacitances of the two capacitor arrangements (Ka, Ka2).

21. Measurement sensor according to Claim 20, characterised in that at least two further identical capacitor arrangements (Ka3, Ka4) are provided, to be arranged in pairs mutually rotated through an angle of 180° with respect to the axis (A) of the shaft (We), further measurement capacitances being formed by a series circuit of

11

the total capacitances of mutually associated capacitor arrangements (Ka3, Ka4), and in that the total measurement capacitance is formed by a parallel circuit of the individual measurement capacitances.

22. Measurement sensor according to Claim 20 or 21 ; characterised in that two clamping rings (Kr1, Kr2) to be arranged at a distance from one another on the shaft (We), are provided for detecting the torsion path ($\Delta$x), between which elastically deformable, closed frames (Ra) for accommodating in each case one capacitor arrangement (Ka, Ka1) are arranged.

23. Measurement sensor according to Claim 22, characterised in that the frame (Ra) is mounted on one clamping ring (Kr1) in a manner such that it can be elastically rotated to a small extent, and is rigidly mounted on the other clamping ring (Kr2).

24. Measurement sensor according to Claim 23, characterised in that the elastically rotatable mounting of the frame (Ra) is implemented on one clamping ring (Kr1) by means of a weak point (Ss1) of this clamping ring (Kr1).

25. System, consisting of a shaft and a measurement sensor, according to one of the preceding claims for the contact-free measurement of torques on rotating shafts, characterised in that the axial measurement distance (1) corresponds to at most half the diameter (D) of the shaft (We).

26. System, consisting of a shaft and a measurement sensor, according to one of the preceding claims for the contact-free measurement of torques on rotating shafts, characterised by an elastic connection of the two clamping rings (Kr), the stiffness of which is negligible in comparison with the stiffness of the shaft (We).

27. System according to Claim 26, characterised in that the clamping rings (Kr) are elastically connected to one another by means of axially orientated pins (St).

## Revendications

1. Capteur de mesure comportant un transducteur capacitif pour des variations de longueur ou de distance, notamment pour la mesure à distance de couples sur des arbres rotatifs, présentant les caractéristiques suivantes :

— les structures d'électrodes (Es1, Es2), électriquement isolées les unes des autres, d'un dispositif à condensateur (Ka) peuvent être déplacées parallèlement entre elles sous l'effet de la variation de longueur ou de distance ($\Delta$x) devant être détectée,

— une première structure d'électrodes (Es1) est constituée par plusieurs électrodes plates (E) distantes et parallèles entre elles et entre lesquelles sont disposées les électrodes (E2) de la seconde structure identique d'électrodes (Es2),

— la capacité totale du dispositif à condensateur (Ka) est déterminée par le branchement en parallèle de couples individuels d'électrodes, qui sont formés respectivement par une électrode (E1) d'une structure d'électrodes (Es) et une électrode voisine associée (E2) de la seconde structure d'électrodes (Es2),

— la distance (d1) entre les électrodes des couples d'électrodes, qui est variable en fonction de la variation de longueur ou de distance ($\Delta$x) devant être détectée, est, dans l'ensemble de la gamme de mesure, faible par rapport à la distance (d2) entre des électrodes voisines (E1, E2), non associées entre elles, des deux structures d'électrodes (Es1, Es2).

2. Capteur de mesure suivant la revendication 1, caractérisé par le fait que les structures d'électrodes (Es1, Es2) sont formées par deux structures en peigne réciproquement imbriquées.

3. Capteur de mesure suivant la revendication 2, caractérisé par le fait que les structures en peigne sont agencées respectivement d'un seul tenant.

4. Capteur de mesure suivant la revendication 2, caractérisé par le fait que les deux structures en peigne peuvent être fabriquées ensemble d'un seul tenant et peuvent être séparées l'une de l'autre mécaniquement et électriquement.

5. Capteur de mesure suivant la revendication 4, caractérisé par le fait que les deux structures en peigne sont réunies entre elles, de manière séparable, par l'intermédiaire de zones d'affaiblissement (Ss).

6. Capteur de mesure suivant l'une des revendications précédentes, caractérisé par le fait que les structures d'électrodes (Es1, Es2) sont disposées sur une couche de support isolante (Ts1, Ts2) réalisée en un matériau thermiquement stable.

7. Capteur de mesure suivant la revendication 6, caractérisé par le fait que la couche de support (Ts1, Ts2) est formée de PTFE.

8. Capteur de mesure suivant l'une des revendications précédentes, caractérisé par le fait que les structures d'électrodes (Es1, Es2) sont formées par des microstructures formées par voie lithographique.

9. Capteur de mesure suivant l'une des revendications précédentes, caractérisé par le fait que la distance variable (d1) entre les électrodes des couples d'électrodes possède une valeur initiale inférieure à 10 microns.

10. Capteur de mesure suivant la revendication 9, caractérisé par le fait que la distance (d1) entre les électrodes des couples d'électrodes est réglable dans une gamme de quelques microns.

11. Capteur de mesure suivant l'une des revendications précédentes, caractérisé par le fait que les électrodes (E1, E2) possèdent une épaisseur (S) de quelques centaines de microns.

12. Capteur de mesure suivant l'une des revendications précédentes, caractérisé par le fait que les électrodes (E1, E2) possèdent une hauteur (h) égale à quelques centaines de microns.

13. Capteur de mesure suivant l'une des revendications précédentes, caractérisé par le fait que la distance (d2) entre les électrodes voisines (E1, E2), non associées entre elles, possèdent une valeur initiale de quelques centaines de microns.

14. Capteur de mesure suivant l'une des revendications précédentes, caractérisé par le fait que les électrodes (E1, E2) des couples d'électrodes s'interpénètrent sur quelques millimètres.

15. Capteur de mesure suivant l'une des revendications précédentes pour la mesure à distance de couples sur des arbres rotatifs, caractérisé par le fait qu'en tant que variation de longueur ou de distance (Δx) devant être détectée, la torsion, qui apparaît à une distance axiale de mesure (1), pouvant être prédéterminée, de l'arbre (We) peut être transmise aux structures d'électrodes (Es1, Es2).

16. Capteur de mesure suivant la revendication 15, caractérisé par le fait que pour réduire la torsion, il est prévu deux bagues de serrage (Kr), qui s'appliquent selon une forme linéaire sur l'arbre (We) dans la direction circonférentielle.

17. Capteur de mesure suivant la revendication 16, caractérisé par le fait que les bagues de serrage (Kr) possèdent respectivement un méplat (Af), sur lequel respectivement l'une associée des deux structures d'électrodes (Es1, Es2), est disposée en étant isolée électriquement.

18. Capteur de mesure suivant l'une des revendications 15 à 17, caractérisé par une transmission inductive des variations de la capacité du dispositif à condensateur.

19. Capteur de mesure suivant la revendication 18, caractérisé par le fait que pour la transmission inductive, il est prévu une bobine annulaire (Rs) installée sur l'arbre axial (We).

20. Capteur de mesure suivant l'une des revendications précédentes, pour la mesure à distance de couples sur des arbres rotatifs, caractérisé par le fait qu'au dispositif à condensateur (Ka) est associé un second dispositif à condensateur identique (Ka2) qui doit être installé en étant pivoté d'un angle de 180° par rapport à l'axe (A) de l'arbre (We), et que la capacité de mesure est formée par un circuit série comprenant les capacités totales des deux dispositifs à condensateurs (Ka, Ka2).

21. Capteur de mesure suivant la revendication 20, caractérisé par le fait qu'il est prévu au moins deux autres dispositifs à condensateurs identiques (Ka3, Ka4), qui doivent être installés par couples, en étant pivotés réciproquement d'un angle de 180°, sur l'axe (A) de l'arbre (We), d'autres capacités de mesure étant formées grâce au montage en série des capacités totales de dispositifs à condensateurs (Ka3, Ka4) associés entre eux, et que la capacité totale de mesure est formée par un branchement en parallèle des différentes capacités de mesure.

22. Capteur de mesure suivant la revendication 20 ou 21, caractérisé par le fait que pour réduire la course de torsion (Δx), il est prévu deux bagues de serrage (Kr1, Kr2), qui doivent être installées à distance l'une de l'autre sur l'arbre (We) et entre lesquelles sont disposés des cadres fermés (Ra) déformables élastiquement et servant à recevoir respectivement un dispositif à condensateur (Ka, Ka1).

23. Capteur de mesure suivant la revendication 22, caractérisé par le fait que le cadre (Ra) est monté, de manière à pouvoir tourner élastiquement sur une faible course, sur une bague de serrage (Kr1) et est monté fixe sur l'autre bague de serrage (Kr2).

24. Capteur de mesure suivant la revendication 23, caractérisé par le fait que le montage, avec possibilité de rotation élastique, du cadre (Ra) sur l'une des bagues de serrage (Kr1) est réalisé au moyen d'une zone d'affaiblissement (Ss1) de cette plaque de serrage (Kr1).

25. Système, constitué par un arbre ou un capteur de mesure, suivant l'une des revendications précédentes pour la mesure à distance de couples sur des arbres rotatifs, caractérisé par le fait que la distance axiale de mesure (1) correspond au maximum à la moitié du diamètre (D) de l'arbre (We).

26. Système constitué par un arbre ou un capteur de mesure suivant l'une des revendications précédentes pour la mesure à distance de couples sur des arbres rotatifs, caractérisé par une liaison élastique des deux bagues de serrage (Kr), dont la rigidité est faible au point d'être négligeable par rapport à la rigidité de l'arbre (We).

27. Système suivant la revendication 26, caractérisé par le fait que les bagues de serrage (Kr) sont reliées élastiquement entre elles par des broches (St) alignées axialement.

FIG 1

FIG 2

FIG 3

FIG 4

**FIG 5**

**FIG 6**

**FIG 7**

EP 0 354 386 B1

FIG 8

Rs

A

Ka2

Kr    Ka    Kr    IF    Dm

FIG 9

IF

FIG 10

Kr

Ka2 →    ← Ka

A

We

FIG 11

Ka2    A

Kr    We

FIG 12

Es1    Ka

A    Es2

Kr    We

16

FIG 13

Ka2

d1

d11

Rs

Ka

FIG 14

Ka2    Ka

d11    d1

Rs

FIG 15

Ka3

Ka2

Rs    Pm

Ka

We

Ka4

FIG 16

Pm

Rs

Ka    Ka2

Ka3    Ka4

FIG 17

Pf3

Ka

A

Pf1

Pf2

Ra

Ss1

We

F

Rs

Kr2

Ss1

Kr1    Ka2    Ra